# EUROPÄISCHE PATENTSCHRIFT

(11) **EP 2 309 232 B1**
(45) Veröffentlichungstag und Bekanntmachung des Hinweises auf die Patenterteilung: **22.07.2015**
(21) Anmeldenummer: 09012832.3
(22) Anmeldetag: 09.10.2009
(51) Int. Cl.: G01D 5/347

(54) **Positionsgeber mit Multiturn-Positionserfassung**
Locator with multi-turn positioning
Indicateur de position doté d'une détermination de position à rotation multiple

(43) Veröffentlichungstag der Anmeldung: 13.04.2011
(73) Patentinhaber: Baumer IVO GmbH & Co. KG, 78056 Villingen-Schwenningen (DE)
(72) Erfinder: Schneider, Michael, 78462 Konstanz (DE); Jahnke, Siegfried, 78652 Deisslingen (DE); Rapp, Günther, 78647 Trossingen (DE)
(74) Vertreter: Strauss, Steffen

(56) Entgegenhaltungen:
- EP-A- 0 502 534
- EP-A- 0 911 610
- EP-A- 1 279 932
- EP-A2- 1 462 771
- WO-A2-2009/047508
- DE-A1-102007 062 780

## Beschreibung

### Gebiet der Erfindung

Die vorliegende Erfindung betrifft einen Positionsgeber zur Erfassung der Position einer um eine Rotationsachse drehbaren Welle.

### Stand der Technik

Positionsgebervorrichtungen finden allgemein zur Überwachung und Steuerung mechanischer Bewegungsabläufe Anwendung. Beispielsweise werden Positionsgeber für die Drehzahlerfassung und Steuerung von Motoren eingesetzt. Positionsgeber zur Bestimmung von Winkelpositionen durch berührungslose Single- oder Multiturn-Abtastung einer drehbaren Welle sind in verschiedenen Ausführungen bekannt.

Die Druckschrift EP 0550794 beschreibt einen Positionsgeber zur Absolutwertpositionserfassung einer drehbaren Welle, mit einer ersten Sensoranordnung und einer ersten Auswerteeinheit zur Erfassung und Auswertung der genauen Position der Welle während einer vollständigen Umdrehung, d.h. der Singleturn-Position, sowie mit einer zweiten Sensoranordnung und einer zweiten Auswerteeinheit zur Erfassung und Auswertung der Anzahl der vollständig durchlaufenen Umdrehungen der Welle, d.h. der Multiturn-Position. Zusätzlich ist eine dritte Auswerteeinheit vorgesehen zur Bildung eines Gesamtabsolutwerts aus dem Singleturn- und aus dem Multiturn-Positionswert und zur Ausgabe dieses Gesamtabsolutwerts an ein übergeordnetes System.

Die Erfassung der Singleturn-Position erfolgt dabei optisch, d.h. eine mit der Welle verbundene Maßverkörperung beeinflusst abhängig von deren Position die Signale einer Anordnung von Photodioden, die von einer LED beleuchtet werden. Die Erfassung der Multiturn-Position erfolgt dagegen magnetisch, d.h. eine mit der Welle verbundene Maßverkörperung beeinflusst abhängig von deren Position die Signale magnetischer Schaltelemente. Bei Abschalten oder Ausfall der externen Spannungsversorgung des Positionsgebers wird Erfassung der Singleturn-Position abgeschaltet. Die Versorgung der Multiturn-Erfassung wird weiter aufrechterhalten, gespeist von einer Batterie im Positionsgeber. Zur Begrenzung des Energieverbrauchs sind die Schaltelemente in Reihe mit einem sehr hochohmigen Widerstand geschaltet, sind aber permanent bestromt. Das Ein- und Ausschalten der Schaltelemente erfolgt abhängig von der Position.

Die Druckschrift EP 1462771 beschreibt einen weiteren Positionsgeber. Die Erfassung der Singleturn-Position erfolgt magnetisch über einen zentral auf der Drehachse fixierten Permanentmagnet und eine drehfeste magnetische Sensoranordnung. Die Erfassung der Multiturn-Position erfolgt ebenfalls magnetisch. Zur Reduktion des Energieverbrauchs werden die Sensorteile durch die Auswerteeinheit nur periodisch für die Zeit der Messung mit Strom/Spannung beaufschlagt. Die Auswertung wird von einem Mikrocontroller übernommen. Dieser Mikrocontroller wird während der Pausen zwischen den Abtastungen in einem Stromspar-Mode mit verringerter Taktfrequenz und abgeschalteter Peripherie betrieben.

Die Druckschrift EP 1279932 beschreibt eine Rotationsdetektionsvorrichtung eines Mehrfachrotationskörpers, wie beispielsweise ein in einem Automobil verwendetes Lenkrad, wobei ein inkrementeller Drehgeber einen Rotationswinkel innerhalb einer Rotation bestimmt.

Die Entgegenhaltung EP 0502534 befasst sich mit einem Positionsgeber, dem ein Inkrementalverfahren zur Bestimmung einer absoluten Position zugrunde liegt. Zur Erfassung einer Absolut Position wird der Positionsgeber auf diese Absolut Position voreingestellt. Der Inkrementimpuls-Zählwert, wie er durch Inkrementsignalphasen erzeugt wird, wird durch den Zähler unter Bezugnahme auf die voreingestellte Position gezählt. Es müssen zwar keine Absolutwertschlitze an einer Massverkörperung mehr angebracht werden, jedoch muss hierzu eine Bezugnahme auf die voreingestellte Position erfolgen.

Die WO 2009/047508 beschreibt einen Drehgeber mit einem AMR oder GMR Magnet-Sensor. Ferner ist ein Energiesparmodus beschrieben, bei dem ein Mikrokontroller abgeschaltet wird und vorherige Signale gespeichert werden. Der Energiesparmodus wird nur eingeschalten, wenn die externe Stromversorgung unterbrochen wurde.

Die EP 0911610 bezieht sich auf einen Winkelsensor zur Bestimmung einer Winkelposition eines sich drehenden Körpers, welcher eine Multi-Pixel-Optikeinrichtung verwendet zum Empfangen von Licht wenigstens eines Abschnitts mit digitalen Mustern. Die digitalen Muster sind hierbei auf einer Oberfläche positioniert, welche sich mit dem drehenden Körper dreht.

Durch das magnetische Prinzip der Multiturn-Erfassung der aus dem Stand der Technik bekannten Positionsgebervorrichtungen ergeben sich jedoch erhebliche Nachteile, wenn ein solcher Positionsgeber in der Nähe einer Magnetbremse eingesetzt wird und das Einkoppeln eines Magnetfelds in die Schaltelemente zu fehlerhaften Schaltimpulsen führt.

### Beschreibung der Erfindung

Der vorliegenden Erfindung liegt gegenüber dem Stand der Technik die Aufgabe zugrunde, einen gegen äussere Magnetfelder unempfindlichen Positionsgeber zu realisieren. In Weiterentwicklungen der Erfindung soll durch einen optimierten Aufbau und einen optimalen Betrieb der Sensoranordnungen sowie der Erfassungs- und Auswerteelektronik eine möglichst kompakte und kostengünstige Bauform sowie eine möglichst lange Lebensdauer erreicht werden.

Die oben genannte Aufgabe wird durch einen Positionsgeber gemäß Anspruch 1 gelöst.

Die beanspruchte Messvorrichtung betrifft einen Positionsgeber zur Erfassung der Position einer um eine Rotationsachse drehbaren Welle, umfassend eine erste optische Sensoranordnung zur Erfassung der Singleturn-Position der Welle, und eine zweite optische Sensoranordnung zur getriebelosen Erfassung der Multiturn-Position der Welle.

Die erste und die zweite optische Sensoranordnung umfassen dabei bevorzugt lichtempfindlichen Elemente wie beispielsweise Fotodioden oder Fototransistoren. Die Erfassung der Multiturn-Position erfolgt somit ebenfalls optisch. Dies ermöglicht eine vollkommene Unempfindlichkeit der Positionserfassung gegen magnetische Felder.

In einer Weiterbildung kann der erfindungsgemäße Positionsgeber weiterhin eine Leuchteinrichtung umfassen, insbesondere eine Leuchtdiodenanordnung mit wenigstens einer Leuchtdiode. Die Leuchtdiodenanordnung kann dabei beispielweise genau eine Leuchtdiode aufweisen, deren Licht von beiden Sensoranordnungen erfasst wird. In einer anderen Ausführung können jeweils eine oder mehrere Leuchtdioden für die jeweiligen Sensoranordnungen vorgesehen sein.

In einer anderen Weiterbildung kann der Positionsgeber weiterhin wenigstens eine, insbesondere genau eine, mit der Welle verbundene Maßverkörperung umfassen. Die mit der drehbaren Welle fest verbundene Maßverkörperung kann Mittel für die Singleturn-Erfassung als auch zusätzlich Mittel für die Multiturn-Erfassung beinhalten. Auf diese Weise wird keine separate Maßverkörperung für die Multiturn-Erfassung mehr benötigt, was wiederum die Anzahl der Teile reduziert und die Lebensdauer und Kompaktheit des Positionsgebers erhöht.

In einer anderen Weiterbildung kann die wenigstens eine mit der Welle verbundene Maßverkörperung eine erste Maßverkörperung und eine zweite Maßverkörperung umfassen, wobei die erste Maßverkörperung zur Erfassung der Singleturn-Position und die zweite Maßverkörperung zur Erfassung der Multiturn-Position geeignet ist. Auf diese Weise kann die zweite Maßverkörperung beispielsweise als einfache Unterbrecherscheibe für eine separate Leuchtdiodenanordnung für die Multiturn-Erfassung ausgebildet sein.

In einer anderen Weiterbildung kann die wenigstens eine Maßverkörperung eine Ausgestaltung aufweisen, die den Lichtweg zur zweiten optischen Sensoranordnung entsprechend eines Teils einer ganzen Umdrehung unterbricht. Auf diese Weise ist eine Multiturn-Position beispielsweise in Viertel, halben oder ganzen Umdrehungen erfassbar.

Der Positionsgeber umfasst eine erste Auswerteeinheit zur Auswertung der Singleturn-Position, eine zweite Auswerteeinheit zur Auswertung der Multiturn-Position und eine Steuer-/Auswerteinheit zur Weiterverarbeitung der Singleturn-Position und der Multiturn-Position. Damit kann eine Vorverarbeitung der Signale von der ersten und der zweiten optischen Sensoranordnung in der ersten bzw. zweiten Auswerteeinheit erfolgen, und die Berechnung eines Gesamtabsolutwerts kann dann in der Steuer-/Auswerteeinheit erfolgen.

Der Positionsgeber weisst wenigstens zwei Betriebsmodi auf, wobei die wenigstens zwei Betriebsmodi einen Normalmodus bei Anliegen einer externen Spannungsversorgung und einen Energiesparmodus bei Abschalten oder Ausfall der externen Spannungsversorgung umfassen. Zur Verringerung des Energieverbrauchs, ist es vorgesehen, dass die Betriebsart der Multiturn-Positionserfassung bei Abschalten oder Ausfall der externen Spannungsversorgung angepasst wird, d.h. dass beispielsweise nur Impulsmessungen (also im Vergleich zur Umlaufperiode kurzzeitige Messungen) vorgenommen werden. Zusätzlich kann vorgesehen sein, dass die Singleturn-Positionserfassung teilweise oder vollständig abgeschaltet wird.

Vorteilhafterweise kann der Positionsgeber so ausgebildet sein, dass im Energiesparmodus die Erfassung der Multiturn-Position lediglich mit der zweiten optischen Sensoranordnung durchgeführt wird und/oder dass im Energiesparmodus die erste optische Sensoranordnung und/oder die erste Auswerteeinheit abgeschaltet ist.

Im Normalmodus ist die Multiturn-Position zusätzlich über die erste Sensoranordnung ermittelbar, wobei die Multiturn-Position mit der ersten Sensoranordnung und der zweiten Sensoranordnung ermittelbar ist und ein Abgleich der beiden ermittelten Position vorgenommen wird.

Durch die beiden zuvor genannten Weiterbildungen kann die Umdrehungserfassung auf die Zeit ohne externe Spannungsversorgung begrenzt werden und in der Zeit mit externer Spannungsversorgung von der Positionserfassung innerhalb einer Umdrehung mit übernommen werden, wobei ein ständiger Datenabgleich mit Diagnosemöglichkeit, gegeben ist.

In einer anderen Weiterbildung kann der Positionsgeber weiterhin eine Energiequelle, insbesondere in Form einer Batterie oder in Form eines Akkumulators, umfassen.

Hierdurch kann zum einen im Energiesparmodus die zweite Sensoranordnung und/oder die Leuchteinrichtung zumindest zeitweise mit Spannung versorgbar sind. Da z.B. die Fotodioden der optischen Sensoranordnung einen vernachlässigbaren Energieverbrauch besitzen, ist es vorzugsweise vorgesehen, diese permanent mit Strom/Spannung zu beaufschlagen.

Zum anderen kann, falls eine derartige Energiequelle vorgesehen ist, eine Einrichtung zur Überwachung der externen Spannungsversorgung und zum Umschalten der Energieversorgung des Positionsgebers bei Abschalten oder Ausfall der externen Energieversorgung auf die Spannungsquelle (17) vorgesehen werden.

Zu einer effizienten Verringerung des Energieverbrauchs ist es vielmehr zweckmäßig, den Betrieb des eigentlichen Aktors mit hohem Energieverbrauch, d.h. den Betrieb der Leuchteinrichtung (z.B. LED) in Abhängigkeit vom Betriebszustand mit einer variablen Einschaltdauer, wie beispielsweise periodisch oder gepulst mit einer variablen Frequenz, zu betreiben. Im Gegensatz zum Stand der Technik erfolgt hier also nicht ein periodischer Betrieb des Sensors, sondern des Aktors.

Eine andere Weiterbildung besteht darin, dass die zweite optische Sensoranordnung zeitlich konstant und/oder die Leuchteinrichtung zeitlich variabel, insbesondere periodisch oder gepulst mit einer variablen Frequenz, mit Spannung versorgbar sein können.

In einer anderen Weiterbildung kann der Positionsgeber weiterhin eine Bewegungsmesseinrichtung umfassen, mit der die Geschwindigkeit und/oder die Beschleunigung der Welle messbar ist, um in Abhängigkeit von der Messung die zeitlich variable Spannungsversorgung der Leuchteinrichtung, insbesondere Frequenz, und/oder Häufigkeit und/oder Dauer der Spannungsversorgung, vorzunehmen. Zusätzlich können mehrere Betriebsarten bzw. mehrere Betriebsfrequenzen für die Ansteuerung der LED vorgesehen sein. Auf diese Weise kann ein besonders vorteilhafter Energiesparmodus realisiert werden, da sich die Welle bei Abschalten oder Ausfall der externen Spannungsversorgung normalerweise nicht oder nur mit kleiner Geschwindigkeit und Beschleunigung dreht.

Eine andere Weiterbildung besteht darin, dass die Steuer- und Auswerteinheit dazu ausgebildet sein kann, die zeitlich variable Spannungsversorgung der Leuchteinrichtung vorzunehmen.

In einer anderen Weiterbildung kann die erste und die zweite optische Sensoranordnung auf einem Sensorbauteil, insbesondere einem ASIC integriert sein.

Eine andere Weiterbildung besteht darin, dass die Steuer- und Auswerteinheit ebenfalls in dem ASIC integriert sein können. Auf diese Weise kann die Anzahl der Bauteile des Positionsgebers reduziert und die Lebensdauer wesentlich erhöht werden. Gleichzeitig verringert sich der Platzbedarf der Sensoren und der Elektronik.

Weitere Merkmale und Vorteile der vorliegenden Erfindung werden im Weiteren mit Bezug auf die Figuren beschrieben, die lediglich beispielhafte Ausführungsformen veranschaulichen und durchaus nicht den gesamten Umfang der Erfindung darstellen. Es versteht sich, dass die gezeigten Merkmale in anderen Kombinationen, als in den Beispielen beschrieben, im Rahmen der Erfindung Verwendung finden können.

### Kurzbeschreibung der Zeichnungen

Figur 1 illustriert Komponenten eines Beispiels einer erfindungsgemäßen Positionsgebervorrichtung.
Figur 2 zeigt ein Blockschaltbild eines weiteren Beispiels einer erfindungsgemäßen Positionsgebers und einer Auswerteeinheit eines erfindungsgemäßen Positionsgebers.

### Beschreibung der Ausführungsformen

Zur Erfassung der Singleturn-Position wird eine optische Abtastung verwendet. Die Erfassung der Multiturn-Position erfolgt ebenfalls optisch. Dies ist neu gegenüber dem in den Druckschriften EP 0550794 und EP 1462771 beschriebenen Stand der Technik, und dies ermöglicht eine vollkommene Unempfindlichkeit der Positionsmessung gegen magnetische Felder.

Da nun sowohl die Singleturn- als auch die Multiturn-Positionserfassung mit optischen Sensoranordnungen realisiert wird, ergibt sich weiterhin die Möglichkeit, dass beide Sensoranordnungen auf demselben Sensorbaustein angeordnet integriert werden können. Zusätzlich können auf diesen Sensorbaustein auch noch weitere Vorrichtungen, wie beispielsweise Auswerteeinheiten, Schnittstellen, Ausgangstreiber sowie Einheiten für den Betrieb, Ansteuerung und Diagnose der LED integriert werden. Auf diese Weise kann die Anzahl der Bauteile des Positionsgebers massiv reduziert und die Lebensdauer bzw. die MTTF Zeit (mittlere Betriebsdauer bis zum Ausfall, engl. Mean Time To Failure) wesentliche erhöht werden. Gleichzeitig verringert sich der Platzbedarf der Sensoren und der Elektronik.

Die mit der drehbaren Welle fest verbundene Maßverkörperung für die Singleturn-Erfassung kann nun zusätzlich Mittel für die Multiturn-Erfassung beinhalten. Auf diese Weise wird keine separate Maßverkörperung für die Multiturn-Erfassung mehr benötigt, was wiederum die Anzahl der Teile reduziert und die Lebensdauer und Kompaktheit erhöht.

Zur Verringerung des Energieverbrauchs, ist es vorgesehen, dass die Multiturn-Positionserfassung bei Abschalten oder Ausfall der externen Spannungsversorgung nur Impulsmessungen vornimmt. Da die Fotodioden der optischen Sensoranordnung, also die Sensoren im Sinne von EP 1462771, jedoch einen vernachlässigbaren Energieverbrauch besitzen, ist es bevorzugt vorgesehen, diese permanent mit Strom/Spannung zu beaufschlagen. Zu einer effizienten Verringerung des Energieverbrauchs ist es vielmehr zweckmässig, den Betrieb des eigentlichen Aktors mit hohem Energieverbrauch, d.h. den Betrieb der LED in Abhängigkeit vom Betriebszustand mit einer variablen Einschaltdauer, wie beispielsweise periodisch oder gepulst mit einer variablen Frequenz, zu betreiben. Im Gegensatz zu EP 1462771 erfolgt hier also nicht ein periodischer Betrieb des Sensors, sondern des Aktors.

Ist die komplette Auswertung in einer anwendungsspezifischen integrierten Schaltung (engl application specific integrated circuit, ASIC) vorgesehen, kann auch die Umdrehungserfassung auf die Zeit ohne externe Spannungsversorgung begrenzt werden, und sie kann in der Zeit mit externer Spannungsversorgung von der Positionserfassung innerhalb einer Umdrehung mit übernommen werden, wobei ein ständiger Datenabgleich mit Diagnosemöglichkeit gegeben ist.

Die Energiequelle für den Betrieb des Umdrehungszählers bei Abschalten oder Ausfall der externen Spannungsversorgung kann beispielsweise eine interne oder externe Batterie bzw. ein externer oder interner Akkumulator sein.

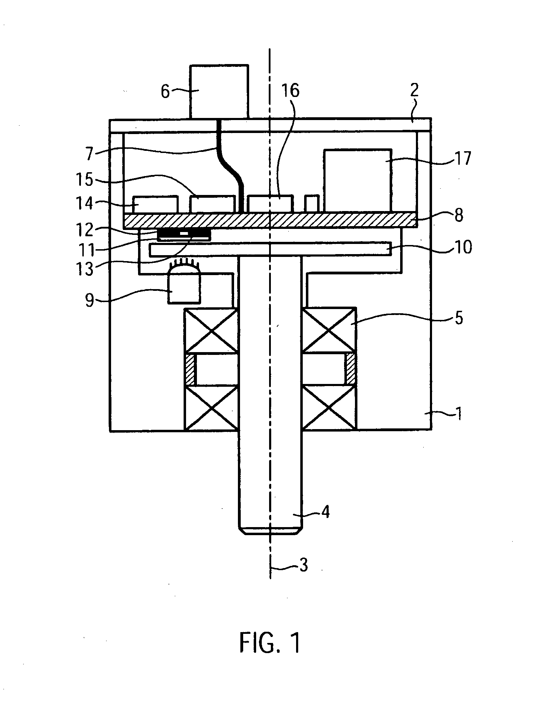

In Figur 1 ist eine erfindungsgemäße Positionsgebervorrichtung gemäß einem Beispiel der vorliegenden Erfindung veranschaulicht.

Die Erfassung der Singleturn-Position innerhalb einer Umdrehung wird darin mit einer Sensoranordnung 12 mit lichtempfindlichen Elementen realisiert, beispielsweise mit

Fotodioden oder Fototransistoren, die durch eine optische Maßverkörperung 10 von einer Leuchtdiodenanordnung 9 beleuchtet werden können.

Beispielhaft ist in dieser Ausführungsform eine erste Auswerteinheit 14 zur Auswertung der Singleturn-Position, eine zweite Auswerteinheit 15 zur Auswertung der Multiturn-Position (Vorverarbeitung der Messsignale) und eine Steuer- und Auswerteinheit 16 z.B. zur Bestimmung eines Gesamtabsolutwerts der Wellenposition (Weiterverarbeitung der Signale von der ersten und der zweiten Auswerteinheit 14, 15) vorgesehen.

Die Leuchtdiodenanordnung 9 wird von der Steuer- und Auswerteinheit 16, beispielsweise einem Mikrokontroller, über Konstantstromquellen je nach Betriebssituation des Positionsgebers nach Bedarf, angesteuert. Auch die Auswertung und Weiterverarbeitung der Singleturn-Position wird von der von der Steuer- und Auswerteinheit 16 je nach Betriebsituation des Positionsgebers nach Bedarf, angesteuert.

Die Auswertung und Weiterverarbeitung der Singleturn-Position wird von der Steuer-und Auswerteinheit 16 ebenfalls je nach Betriebsituation des Positionsgebers nach Bedarf vorgenommen. Bei Anliegen der externen Spannungsversorgung, d.h. im Normalbetrieb kann die Singleturn-Position auch alternativ oder zusätzlich zur Erfassung und Auswertung der Multiturn-Sensoranordnung verwendet werden. Auf diese Weise können Fehler erkannt und kann die Sicherheit der Abtastung erhöht werden.

Die Erfassung der Multiturn-Position und/oder der Drehrichtung, d.h. die Erfassung eines Teils einer Umdrehung (beispielsweise viertel, halben oder ganzen Umdrehungen) kann über eine besondere Ausgestaltung der Maßverkörperung 10 erreicht werden, die den Lichtweg zwischen Dioden und Fotoempfänger entsprechend unterbricht. Hierbei kann die Maßverkörperung 10 verwendet werden, die auch für die Erfassung der Singleturn-Position verwendet wird.

Bei Anliegen der externen Spannungsversorgung, d.h. im Normalbetrieb, kann die Leuchtdiodenanordnung 9, beispielsweise permanent bestromt werden. Sie kann aber auch mit einer variablen Einschaltdauer, wie beispielsweise periodisch oder gepulst mit einer variablen Frequenz, betrieben werden. Sie kann insbesondere zeitweise auch unbestromt sein.

Bei Abschalten oder Ausfall der externen Spannungsversorgung d.h. im Energiesparbetrieb, kann die Leuchtdiodenanordnung 9 mit einer variablen Einschaltdauer, wie beispielsweise periodisch oder gepulst mit einer variablen Frequenz, betrieben werden, die reduziert ist gegenüber dem Normalbetrieb. Häufigkeit und Dauer der Bestromung kann mit der ersten erkannten Signaländerung erhöht werden.

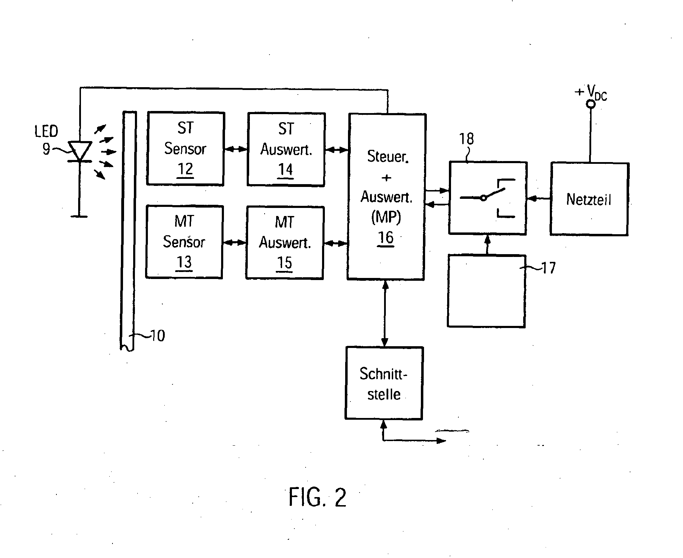

Eine besonders vorteilhafte Ausführung ist es, wenn die für die Erfassung der Umdrehungen notwendigen Strukturen mit auf der Maßverkörperung 10 angeordnet sind und so auf eine zusätzliche Maßverkörperung oder eine Unterbrecherscheibe (siehe Figur 2) verzichtet werden kann.

Bei Abschalten oder Ausfall der externen Spannungsversorgung wird die Umdrehungszählung mit einer Energiequelle versorgt. Diese Energiequelle 17 kann eine Batterie oder ein Akkumulator sein. Die Energiequelle 17 kann in den Positionsgeber integriert oder außerhalb des Gehäuses des Positionsgebers angeordnet sein.

Die Ansteuerung der LED, beispielsweise Frequenz, Häufigkeit oder Dauer des Einschaltens, kann abhängen von Betriebsparametern des Positionsgebers, beispielsweise von der Geschwindigkeit und/oder der Beschleunigung der Bewegung der Welle. Dazu kann eine Vorrichtung vorhanden sein, die es erlaubt, auch im Energiesparmodus die Geschwindigkeit und/oder die Beschleunigung zu ermitteln. Zusätzlich können mehrere Betriebsarten beispielsweise mehrere Betriebsfrequenzen für die Ansteuerung der LED vorgesehen sein. Auf diese Weise kann ein besonders vorteilhafter Energiesparmodus realisiert werden, da sich die Welle bei Abschalten oder Ausfall der externen Spannungsversorgung normalerweise nicht oder nur mit kleiner Geschwindigkeit und Beschleunigung dreht.

Figur 2 zeigt ein Blockschaltbild eines weiteren Beispiels einer Positionsgebervorrichtung und einer Auswerteeinheit eines erfindungsgemäßen Positionsgebers. Der Positionsgeber dient der Absolutwertpositionserfassung einer drehbar gelagerten Welle, wobei der Positionsgeber eine Glascodescheibe 10 in Kombination mit einer LED 9 und einem Singleturn-Sensor 12 zur Erfassung der Position innerhalb einer vollständigen Umdrehung, einen Multiturn-Sensor 13 zur Erfassung der Anzahl der Umdrehungen und der Drehrichtung, eine erste Auswerteinheit 14 zur Auswertung der Singleturn-Position, eine zweite Auswerteinheit 15 zur Auswertung der Multiturn-Position und eine Steuer- und Auswerteinheit 16. Letztere kann beispielsweise einen Gesamtabsolutwert aus der Singleturn- und der Multiturn-Position bilden und über eine Schnittstelle ausgeben. Weiterhin kann die Steuer- und Auswerteinheit 16 das Ein- und Ausschalten der LED 9 steuern, z.B für kurzzeitige Messintervalle (Impulsmessung) im Falle eines Netzspanungsausfalls (wie bereits im Zusammenhang mit Fig. 1 beschrieben), wobei die Steuer- und Auswerteinheit 16 dann durch die Energiequelle 17 (Batterie oder Akku) mit Strom/Spannung versorgt wird.

Ferner zeigt Fig. 2 eine Einrichtung 18 zum Überwachen einer externen Spannungsversorgung und zur Umschaltung auf die Energiequelle 17 bei Abschalten oder Ausfall der externen Spannungsversorgung.

Eine zusätzliche, optimierte Erweiterung des Systems kann durch eine Integration der Fotoempfänger in einen Opto-ASIC erfolgen. Durch die höhere, erzielbare Verarbeitungsgeschwindigkeit im Opto-ASIC kann der Stromverbrauch im Batteriebetrieb noch weiter reduziert und die zulässige Grenzfrequenz des Abtastsystems erhöht werden.

## Patentansprüche

1. Positionsgeber zur Erfassung der Position einer um eine Rotationsachse (3) drehbaren Welle (4), umfassend
eine erste optische Sensoranordnung (12) zur Erfassung der Singleturn-Position der Welle,
eine zweite optische Sensoranordnung (13) zur getriebelosen Erfassung der Multiturn-Position der Welle,
eine Steuer- und Auswerteinheit (16) zur Weiterverarbeitung der Singleturn-Position und der Multiturn-Position wobei
der Positionsgeber einen Normalmodus bei Anliegen einer externen Spannungsversorgung und einen Energiesparmodus bei Abschalten oder Ausfall der externen Spannungsversorgung umfasst,
**dadurch gekennzeichnet, dass**
eine erste separate Auswerteeinheit (14) zur Auswertung der Singleturn-Position und eine zweite separate Auswerteeinheit (15) zur Auswertung der Multiturn-Position vorgesehen ist und
im Normalmodus die Multiturn-Position der Welle zusätzlich über die erste optische Sensoranordnung ermittelbar ist und ein Abgleich der beiden somit ermittelten Multiturn-Positionen durchführbar ist, so dass Fehler erkannt und die Sicherheit der Erfassung der Multiturn Position erhöht werden kann.

2. Positionsgeber gemäß Anspruch 1, **dadurch gekennzeichnet, dass** weiterhin eine Leuchteinrichtung (9), insbesondere eine Leuchtdiodenanordnung (9) mit wenigstens einer Leuchtdiode, umfasst ist.

3. Positionsgeber gemäß Anspruch 1 oder 2, **dadurch gekennzeichnet, dass** weiterhin wenigstens eine, insbesondere genau eine, mit der Welle verbundene Maßverkörperung (10) umfasst ist.

4. Positionsgeber gemäß Anspruch 3, **dadurch gekennzeichnet, dass** die wenigstens eine mit der Welle verbundene Maßverkörperung eine erste Maßverkörperung (10) und eine zweite Maßverkörperung (11) umfasst, wobei die erste Maßverkörperung zur Erfassung der Singleturn-Position und die zweite Maßverkörperung zur Erfassung der Multiturn-Position geeignet ist.

5. Positionsgeber gemäß Anspruch 4, **dadurch gekennzeichnet, dass** die wenigstens eine Maßverkörperung eine Ausgestaltung aufweist, die den Lichtweg zur zweiten optischen Sensoranordnung entsprechend eines Teils einer ganzen Umdrehung unterbricht.

6. Positionsgeber gemäß einem der vorstehenden Ansprüche, **dadurch gekennzeichnet, dass** im Energiesparmodus die Erfassung der Multiturn-Position lediglich mit der zweiten optischen Sensoranordnung durchgeführt wird und / oder dass im Energiesparmodus die erste optische Sensoranordnung und / oder die erste Auswerteeinheit abgeschaltet ist.

7. Positionsgeber gemäß einem der vorstehenden Ansprüche, **dadurch gekennzeichnet, dass** eine Energiequelle (17), insbesondere in Form einer Batterie oder in Form eines Akkumulators, und eine Einrichtung zur Überwachung der externen Spannungsversorgung und zum Umschalten vom Normalmodus in den Energiesparmodus, insbesondere auf die Energiequelle (17) vorgesehen sind.

8. Positionsgeber gemäß einem der vorstehenden Ansprüche, **dadurch gekennzeichnet, dass** im Energiesparmodus die zweite optische Sensoranordnung (13) zumindest zeitweise mit Spannung versorgbar ist.

9. Positionsgeber gemäß Anspruch 2 **dadurch gekennzeichnet, dass** im Energiesparmodus die zweite optische Sensoranordnung (13) zeitlich konstant und / oder die Leuchteinrichtung zeitlich variabel, insbesondere periodisch oder gepulst mit einer variablen Frequenz, mit Spannung versorgbar sind.

10. Positionsgeber gemäß einem der vorstehenden Ansprüche, **dadurch gekennzeichnet, dass** eine Bewegungsmesseinrichtung umfasst ist, mit der die Geschwindigkeit und / oder die Beschleunigung der Welle messbar ist, um in Abhängigkeit von der Messung die zeitlich variable Spannungsversorgung der Leuchteinrichtung, insbesondere Frequenz, und / oder Häufigkeit und / oder Dauer der Spannungsversorgung, vorzunehmen.

11. Positionsgeber gemäß einem der vorstehenden Ansprüche, **dadurch gekennzeichnet, dass** die erste und die zweite optische Sensoranordnung auf einem Sensorbauteil, insbesondere einem ASIC integriert sind.

12. Positionsgeber gemäß Anspruch 11 , **dadurch gekennzeichnet, dass** die Steuer-, und Auswerteinheit ebenfalls in dem ASIC integriert ist.

## Claims

1. Position encoder for the detection of the position of a shaft (4) rotatable about a rotation axis (3), comprising a first optical sensor array (12) for the detection of the single turn position of the shaft, a second optical sensor array (13) for the gearless detection of the multi-turn position of the shaft, a control and evaluation unit (16) for the further processing of the single turn position and of the multi-turn position, whereby the position encoder comprises a normal mode for the application of an external voltage supply and an energy-saving mode for when the external voltage supply is switched off or fails,
**characterized in that**
a first separate evaluation unit (14) is provided for evaluating the single turn position and a second separate evaluation unit (15) is provided for evaluating the multi-turn position, and in normal mode the multi-turn position of the shaft can also be detected by means of the first optical sensor array and a comparison of the thus detected multi-turn positions can be carried out so that errors can be detected and the reliability of the detection of the multi-turn position can be increased.

2. Position encoder in accordance with Claim 1, **characterized in that** a lighting device (9), in particular a light-emitting diode array (9) with at least one light-emitting diode, is still included.

3. Position encoder in accordance with Claim 1 or 2, **characterized in that** at least one, in particular exactly one, material measure (10) connected to the shaft is still included.

4. Position encoder in accordance with Claim 3, **characterized in that** the at least one material measure connected to the shaft comprises a first material measure (10) and a second material measure (11), whereby the first material measure is suitable for detecting the single turn position and the second material measure is suitable for detecting the multi-turn position.

5. Position encoder in accordance with Claim 4, **characterized in that** the at least one material measure has a design that interrupts the light path to the second optical sensor array in accordance with a part of an entire rotation.

6. Position encoder in accordance with one of the above Claims, **characterized in that** in the energy-saving mode, the detection of the multi-turn position is carried out only with the second optical sensor array and / or that in the energy-saving mode, the first optical sensor array and / or the first evaluation unit is switched off.

7. Position encoder in accordance with one of the above Claims, **characterized in that** an energy source (17), in particular in the form of a battery or in the form of an accumulator, and a device for monitoring the external voltage supply and for switching from normal mode to energy-saving mode, in particular with respect to the energy source (17), are provided for.

8. Position encoder in accordance with one of the above Claims, **characterized in that** in the energy-saving mode, the second optical sensor array (13) can be supplied with voltage, at least temporarily.

9. Position encoder in accordance with Claim 2, **characterized in that** in the energy-saving mode, the second optical sensor device (13) is supplied constantly in time with voltage, and / or the lighting device is supplied variably in time with voltage, in particular periodically or pulsed with a variable frequency.

10. Position encoder in accordance with one of the above Claims, **characterized in that** a motion measuring device is included with which the speed and / or the acceleration of the shaft is measurable, in order, subject to the measurement, to perform the variable voltage supply in time of the lighting device, in particular frequency, and / or frequency and / or duration of the voltage supply.

11. Position encoder in accordance with one of the above Claims, **characterized in that** the first and the second optical sensor arrays are integrated on a sensor component, in particular on an ASIC.

12. Position encoder in accordance with Claim 11, **characterized in that** the control and evaluation unit is also integrated in the ASIC

## Revendications

1. Codeur de position permettant de détecter la position d'un axe rotatif (4) autour d'un axe de rotation (3), comprenant un premier agencement de détecteur optique (12) permettant de détecter la position monotour de l'axe, un second agencement de détecteur optique (13) permettant de détecter sans réducteur la position multitour de l'axe, une unité de commande et d'évaluation (16) permettant de transformer la position monotour et la position multitour, le codeur de position comprenant un mode normal en cas de demande d'une alimentation externe et un mode d'économie d'énergie en cas de coupure ou de défaillance de l'alimentation externe,
**caractérisé en ce qu'**
une première unité d'évaluation séparée (14) est prévue pour évaluer la position monotour et une seconde unité d'évaluation séparée (15) est prévue pour évaluer la position multitour et en mode normal, la position multitour de l'axe peut également être déterminée par le biais du premier agencement de détecteur optique et un ajustement des deux positions multitour ainsi déterminées peut être réalisé de telle sorte que l'erreur peut être détectée et la sécurité de détection de la position multitour accrue.

2. Codeur de position selon la revendication 1, **caractérisé en ce qu'**un dispositif lumineux (9), en particulier un agencement de diodes électroluminescentes (9) avec au moins une diode électroluminescente, est inclus.

3. Codeur de position selon la revendication 1 ou 2, **caractérisé en ce qu'**au moins un, en particulier exactement un étalon de mesure (10) raccordé à l'axe est inclus.

4. Codeur de position selon la revendication 3, **caractérisé en ce que** le au moins un étalon de mesure raccordé à l'axe comprend un premier étalon de mesure (10) et un second étalon de mesure (11), le premier étalon de mesure étant conçu pour détecter la position monotour et le second étalon de mesure pour détecter la position multitour.

5. Codeur de position selon la revendication 4, **caractérisé en ce que** le au moins un étalon de mesure présente une configuration qui interrompt le chemin optique jusqu'au second agencement de détecteur optique suivant une partie du tour complet.

6. Codeur de position selon l'une des revendications précédentes, **caractérisé en ce que**, dans le mode d'économie d'énergie, la détection de la position multitour est réalisée uniquement avec le second agencement de détecteur optique et/ou, **en ce que**, dans le mode d'économie d'énergie, le premier agencement de détecteur optique et/ou la première unité d'évaluation sont désactivés.

7. Codeur de position selon l'une des revendications précédentes, **caractérisé en ce qu'**une source d'énergie (17), en particulier sous la forme d'une batterie ou sous la forme d'un accumulateur, et un dispositif de surveillance de l'alimentation externe et de commutation du mode normal au mode d'économie d'énergie, sont prévus en particulier sur la source d'énergie (17).

8. Codeur de position selon l'une des revendications précédentes, **caractérisé en ce que**, dans le mode d'économie d'énergie, le second agencement de détecteur optique (13) peut être alimenté au moins temporairement en tension.

9. Codeur de position selon la revendication 2, **caractérisé en ce que**, dans le mode d'économie d'énergie, le second agencement de détecteur optique (13) est alimenté en tension de manière constante dans le temps et/ou le dispositif lumineux de manière variable dans le temps, en particulier de manière périodique ou pulsée avec une fréquence variable.

10. Codeur de position selon l'une des revendications précédentes, **caractérisé en ce qu'**un dispositif de mesure de mouvement est inclus, lequel permet de mesurer la vitesse et/ou l'accélération de l'axe, afin de procéder, en fonction de la mesure, à l'alimentation variable dans le temps du dispositif lumineux, en particulier la fréquence, et/ou la durée de l'alimentation et/ou la fréquence.

11. Codeur de position selon l'une des revendications précédentes, **caractérisé en ce que** les premier et second agencements de détecteur optique sont intégrés sur un composant de détecteur, en particulier un ASIC.

12. Codeur de position selon la revendication 11, **caractérisé en ce que** l'unité de commande et d'évaluation est également intégrée dans l'ASIC.
